# EUROPEAN PATENT SPECIFICATION

(11) **EP 1 377 082 B1**
(45) Date of publication and mention of the grant of the patent: **14.03.2007**
(21) Application number: 02291617.5
(22) Date of filing: 28.06.2002
(51) Int. Cl.: H04Q 3/00

(54) **Proxy load balancer**
Proxylastabgleicher
Répartiteur de charge d'un proxy

(43) Date of publication of application: 02.01.2004
(73) Proprietor: Compaq Information Technologies Group, L.P., Houston, Texas 77070 (US)
(72) Inventor: Lamberton, Marc, 06600 Antibes (FR)
(74) Representative: Lloyd, Richard Graham

(56) References cited:
- WO-A-00/79807
- US-A1- 2002 075 900

## Description

### BACKGROUND OF THE INVENTION

### Field of the Invention

The preferred embodiments of the present invention are directed generally to switched circuit and wireless telephone networks. More particularly, the preferred embodiments are directed out-of-band signaling in support of telephone system operations. More particularly still, the preferred embodiments are directed to a load balancer for balancing signal traffic between signaling gateways and application service processes performing tasks such as toll free number translations and maintaining location registers.

### Background of the Invention

Consider for purposes of explanation a telephone customer picking up the receiver of the telephone and dialing a telephone number intending to make a connection. The communication between the customer's telephone and telephone company's equipment, commonly known as a switch, is accomplished via the tones created by actuation of the buttons on the telephone. Thus, the residential customer tells the switch the number to connect to through the use of in-band signaling - over the same communication link as will eventually carry the voice or data communications. However, most modem telephone systems perform what is known as "out-of-band" signaling in support call establishment. By out-of-band signaling, it is meant that any communications required between the switch and other equipment, such as a second switch or signaling gateways take place on communication channels other than the channel by which the voice or data communications flow. Typically, the out-of-band signaling takes place by means of digital communication channels. Thus, establishing connections between two telephones involves a complex interaction of digital messages, hereinafter referred to generally as signaling.

Although there may be several protocols for out-of-band signaling, the most commonly used protocol, in North America and Europe, is known as Signaling System No. 7 (SS7). However, SS7 defines more than just a protocol for communication between switches. The SS7 protocol defines an entire switching network for facilitating signaling for call establishment, billing, routing, and information exchange functions of switched circuit networks. The switched circuit networks may comprise not only telephone service, but also wireless communication systems such as cell phone systems and paging devices.

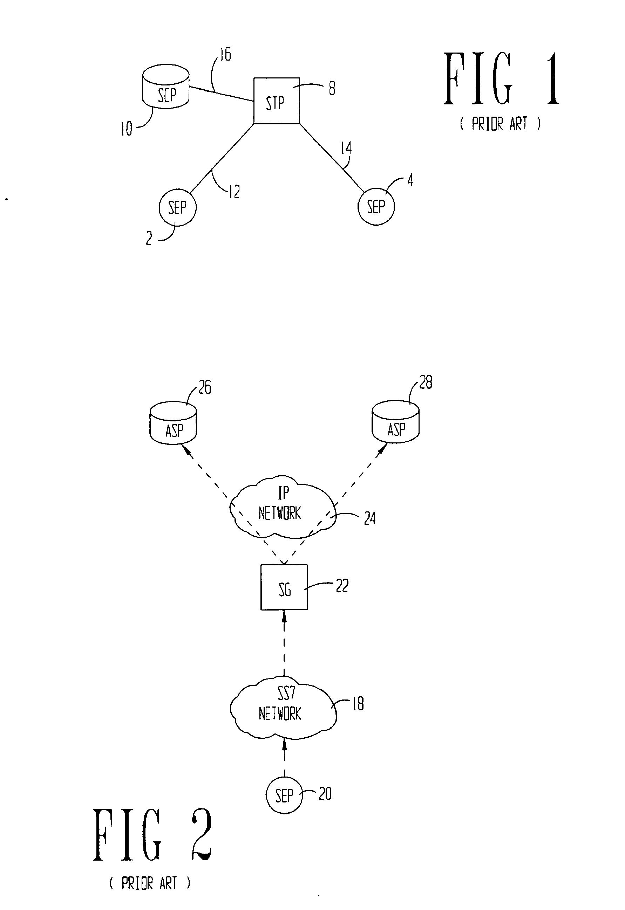

Figure 1 shows an exemplary prior art system operating under the SS7 protocol. In particular, Figure 1 shows two signaling end points (SEPs) 2,4, which in the example of telephone service would be the switch to which the telephone is coupled. Extending between the two SEPs 2,4 is a trunk (not shown) that carries the voice or data communications. Each of the SEPs 2,4 also coupled to a signaling transfer point (STP) 8. Coupled to the same SS7 network is a server 10 running a service, which acts as a database whose function is dependent upon the network implemented. In an intelligent network, the server 10 may be a signaling control point (SCP). Establishing a call between a telephone connected to SEP 2 and telephone connected to SEP 4 involves SEP 2 sending a series of digital messages across the digital link 12 which are routed to SEP 4 via digital link 14. Thus, SEP 2 sends and receives a series of messages to and from SEP 4 through the signaling transfer point 8 over the communication pathways 12 and 14. If the destination telephone number is known, then part of the exchange of information between SEP 2 and SEP 4 is trunk information and the call is connected. If, however, the telephone number dialed by the telephone coupled to SEP 2 is a toll free number, then some number translation is required. In such a circumstance, the signaling end point 2 formulates a signaling message to the signaling control point 10, which in this example translates the virtual toll free number into a telephone number representing a physical telephone and replies to the SEP 2. The SEP 2 establishes the call the physical number as described above.

Switched circuit telephone network users have, in recent years, steadily increased bandwidth requirements. As the number of users and their respective bandwidth requirements increase, it becomes necessary to increase the network capability. Expansion, however, is penalized by expensive proprietary equipment of the SS7 system. This expense is incurred not only in building the specialty network, but is also incurred in the maintenance of the SS7 network, as it requires specialty equipment and highly skilled people to maintain the system. For this reason, there is a trend in the telephone industry to migrate telephone systems using SS7 based networks for signaling to Internet Protocol (IP) networks. This migration is due, to some extent, to the fact that IP networks are more abundant, and their hardware more readily available which result in a savings in scale. The International Engineering Task Force (IETF) has created a working group to study the migration of telephone signaling from SS7 networks to IP networks. The group, known as the Sigtran group, studies the intricacies of migration to an IP network, and further has defined several new communication protocols (implemented in programs of layered network communication), to facilitate hauling of SS7 signaling messages across IP networks.

Figure 2 shows an exemplary related art system of a portion of a signaling system that incorporates not only a SS7 network 18 between a signaling end point 20 and a signaling gateway 22, but also an IP network 24 coupled between multiple application server processes (ASPs) 26 and 28. Generally speaking, signaling across an IP network involves replacing the lower levels of the SS7 layered protocol with IP network protocol communications and transport layers.

As a practical matter, however, it is difficult to expand a system such as that shown in Figure 2. In particular, typically a large telephone company owns the SS7 network 18 as well as the signaling gateway 22. The application server processes 26, 28 (running software programs known generally in the art as application services) could be owned, for example, by a regional telephone service provider. As traffic to the application server processes 26, 28 increases from the signaling gateway 22, there may be a need to place additional application server processes in the system. However, because the signaling gateway 22 is owned by different company, adding a application server process is not as easy as a mere physical installation. Rather, the addition may require extensive negotiations with the signaling gateway owner as well as new contracts, new physical connections, and the like. Relatedly, while the signaling gateway 22 may perform some load balancing operations, this may not be the load balancing preferred or required by the owner of the application server processes.

US 2002/0075900 describes proposed signalling transport protocol extensions for load balancing and server pool support.

Thus, what is needed in the art is to isolate the application server processes from the signaling gateway in such a way that application server processes may be added, removed or maintained without intervention of the signaling gateway owner, and further such that load balancing may be accomplished at the discretion of the application server processes owner.

### SUMMARY OF SOME OF THE PREFERRED EMBODIMENTS

The problems noted above are solved in large part by the invention as set out in the independent claims. A load balancer is coupled between a signaling gateway and application server processes running application services. The load balancer preferably is owned and controlled by the same entity that owns and maintains the application server processes. The load balancer preferably appears to be an application server process to the signaling gateway and thus receives communications directed to application server processes, and relays those communications to one of the application server processes to distribute the computing tasks.

The load balancer also preferably appears, to the plurality of application server processes, to be a signaling gateway. That is, all data communications between the application server processes running application services (such as toll free telephone number translation) and the signaling gateway take place through the load balancer, but as far as the application server processes are concerned, they are communicating directly to the signaling gateway. Because the expansion of the SS7 protocol to include signaling over an IP network provides for only a single level signaling gateway to application server processes communication, the load balancer also preferably performs consolidation of signaling messages from the application server processes to the signaling gateway such that the communication between the signaling gateway and the load balancer follows the SS7 protocol as modified for IP network communications.

### BRIEF DESCRIPTION OF THE DRAWINGS

For a detailed description of the preferred embodiments of the invention, reference will now be made to the accompanying drawings in which:
Figure 1 shows a prior art system operating under the SS7 protocol;
Figure 2 shows an exemplary related art system incorporating an IP network between the signaling gateways and the application server processes running application services;
Figure 3A shows the preferred implementation of a system using an application server process as a proxy load balancer between the signaling gateway and application server processes running application services;

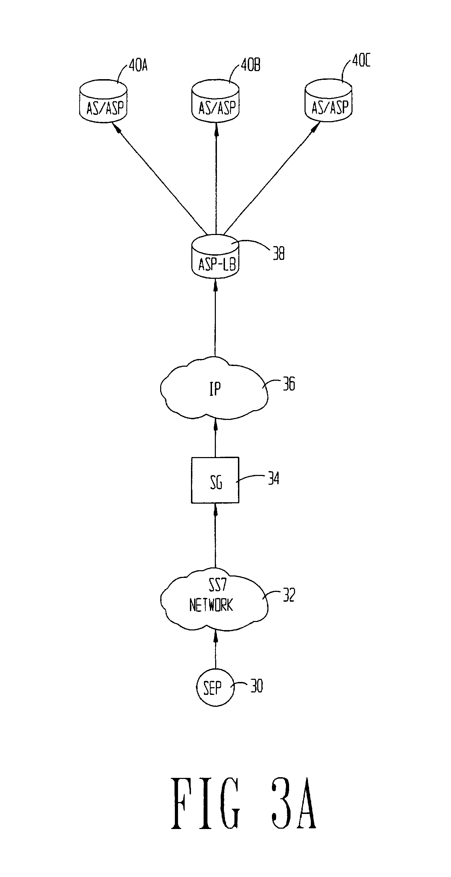

Figure 3A shows the preferred implementation of a system using an application server process as a proxy load balancer between a plurality of signaling gateways and application server processes running application services;

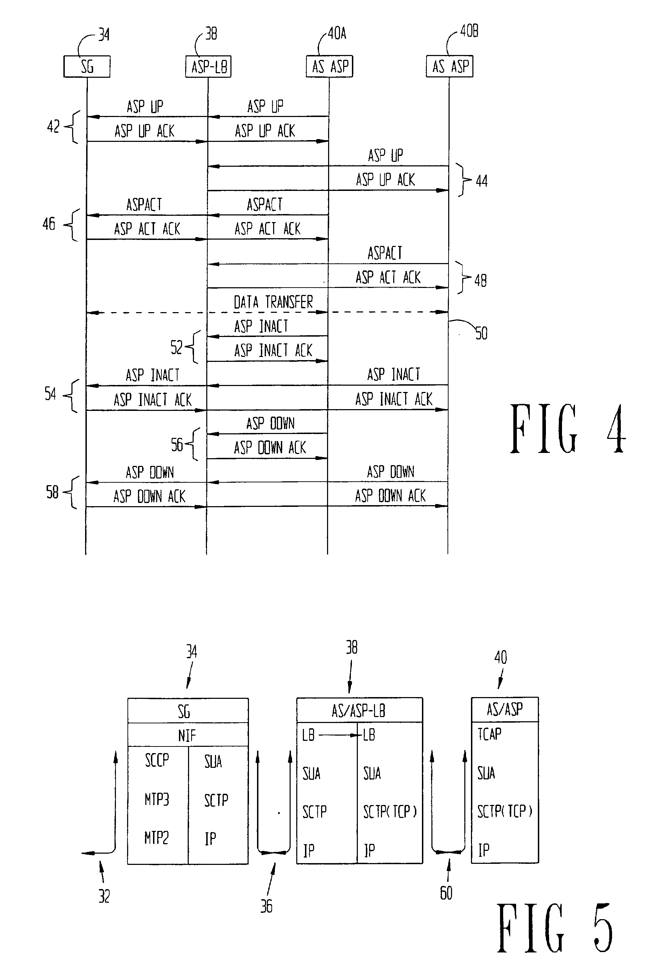

Figure 4 shows examples of the proxy load balancer consolidating messages propagating between the signaling gateways and the application server processes running application services;
Figure 5 shows various layers of the layered protocol communication schemes between the signaling gateway and the application server processes running the application services; and

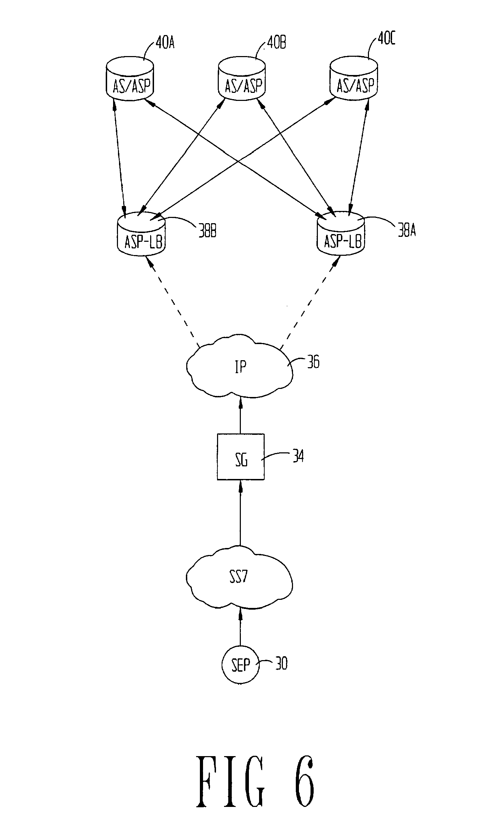

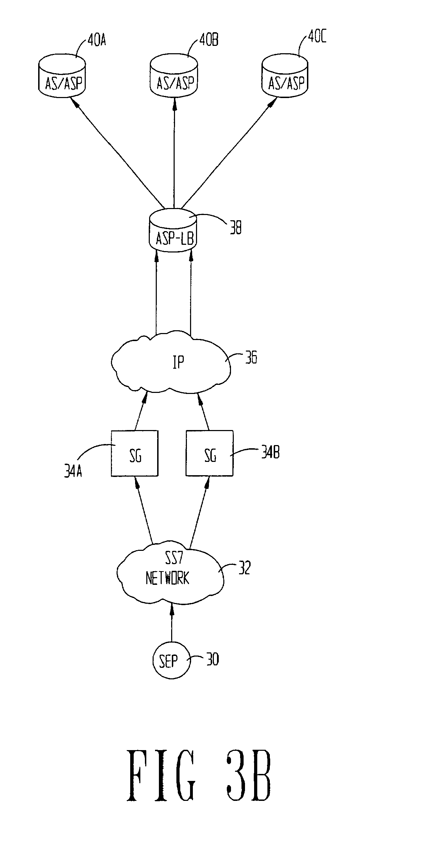

Figure 6 shows an embodiment having multiple or redundant proxy load balancers.

### NOTATION AND NOMENCLATURE

Certain terms are used throughout the following description and claims to refer to particular system components. As one skilled in the art will appreciate, computer and telephone companies may refer to a component by different names. This document does not intend to distinguish between components that differ in name but not function.

In the following discussion and in the claims, the terms "including" and "comprising" are used in an open-ended fashion, and thus should be interpreted to mean "including, but not limited to...". Also, the term "couple" or "couples" is intended to mean either an indirect or direct electrical connection. Thus, if a first device couples to a second device, that connection may be through a direct electrical connection, or through an indirect electrical connection via other devices and connections.

Throughout the specification, and in the claims, the term "application server process" refers to a piece of hardware, a computer or server, running software to perform a task and communicating with other devices and/or programs over a communication channel. Further, reference to an "application service" means a software program running on hardware (an application server process) to perform a task related to the telephone network, such as (but not limited to) toll free number translation, maintaining home location registers, and maintaining visitor location registers.

### DETAILED DESCRIPTION OF THE PREFERRED EMBODIMENTS

Figure 3A shows the preferred implementation of the Sigtran user adaptation proxy load balancer. In particular, Figure 3A shows a signaling end point (SEP) 30 (which could be a telephone switch if the system is implemented for residential or commercial telephone service) coupled to a signaling gateway (SG) 34 by way of a signaling system 7 (SS7) network 32. Only one such signaling end point 30 is shown in Figure 3A for simplicity of the drawing; however, it is understood that many signaling end points may be coupled to the signaling gateway, either directly or through other signaling gateways. The signaling gateway 34 is preferably adapted to communicate to the application server process load balancer (ASP-LB) 38 over an internet protocol (IP) network 36. While only one application server processes 38 is shown for simplicity, any number of application server processes may be coupled to the signaling gateway. The signaling gateway may need to communicate with the application server process 38 for many reasons, such as performing toll-free number translations (for hard-wired telephone systems) or for access to and updating of visitor location or home location registers (for wireless networks). As discussed in the Background section, communications between the signaling end point 30 and signaling gateway 34, as well as the communications between the signaling gateway 34 and the application server processes 38 over the IP network 36 are known by those of ordinary skill in the art and therefore need not be described in great detail here.

Still referring to Figure 3A, the application server process 38, running an application service (AS), preferably acts as a load balancer distributing signaling messages from the signaling gateway 34 to any number of application server processes 40. That is, in the preferred embodiment, the application server processes 38 acting as a load balancer preferably does not service the signaling messages from the signaling gateway 34 itself, but rather distributes those signaling messages to other application server processes 40 coupled to the ASP-LB 38. Figure 3B shows that the application server process may act as a proxy load balancer for a plurality of signaling gateways (labeled 34A and 34B in Figure 3B).

As discussed in the Background section, the signaling gateway 34 may be owned by a different entity than the entity that owns the application server process 38. Moreover, there may be a significant distance between the signaling gateway 34 and the application server process 38. In the preferred embodiments, the application server process 38 acting as a load balancer is proximate to, preferably within, the same rack of servers as the application server processes 40 that service the signaling messages from the signaling gateway 34. As shown in Figure 3, communications between the signaling gateway 34 and the application server process 38 preferably take place over an Internet Protocol (IP) network 36. Communication between the ASP-LB 38 and the application server processes 40 running application services preferably takes place, because of their proximity, over a local area network (LAN) protocol such as Stream Control Transmission Protocol (SCTP) or, in an alternative embodiment, standard Transmission Control Protocol (TCP). The various layers of the communication protocol existing between the signaling end point 30 and each of the application server processes 40 is discussed more fully below. Before delving into the layered protocol topic, however, it is important to discuss some of the functions the application server process 38 performs to facilitate the load balancing operation, without requiring modification to either the signaling gateway 34 or application server processes 40 from the way they operate in the prior art systems without a load balancer. Stated otherwise, in the preferred embodiments, neither the signaling gateway 34 nor the application server processes 40 running the application services know, or need be modified, to account for the application server processes 38 acting as a load balancer. From the perspective of the signaling gateway 34, the ASP-LB 38 appears to be a single application server process responding to the signaling messages presented. Likewise, from the perspective of one of the application server process 40, for example application server 40A, the ASP-LB 38 appears to be the signaling gateway 34. Not only may application server processes 40 be added or removed in general, but also one may perform maintenance, and the like, without affecting operation. It could be said that the ASP-LB 38 and the application server processes 40 are parts of a distributed application server process.

While Figures 3A and 3B show a single application server process acting as the load balancer, it is within the contemplation of this invention that, depending on the required complexity of the SS7 system, or based on the desire to have redundancy at the load balancer portion of the system, additional load balancers may be included between the signaling gateway 34 and the application server processes 40 running application services. In particular, Figure 6 shows an embodiment where the signaling gateway may communicate with either of a plurality of ASP-LBs 38. Preferably, each of the ASP-LBs 38 in the system shown in Figure 6 are coupled to application server processes 40 running application services. Thus, the signaling gateway may forward signaling messages to either of the ASP-LBs 38, and the ASP-LBs in turn may forward the signaling messages to any of the application server processes 40 running application services. While only two ASP-LBs 38 performing the load balancing function are shown in Figure 6, any number of load balancers may be implemented within a system, and this would still be within the contemplation of this invention.

Figure 4 exemplifies several situations where the application server process 38, acting as a load balancer, acts as a single application server process with respect to the signaling gateway 38 and also appears to be a signaling gateway to the application server processes 40. In particular, a typical exchange of signals between an application server process and a signaling gateway involves the application server process notifying the signaling gateway that it is operational, as well as an acknowledgement thereof by the signaling gateway. Further, the application server process informs the signaling gateway that a particular application service is active, which again is acknowledged by the signaling gateway. There are also corresponding signals and acknowledgments as the application services, and application server processes, become inoperable. In particular, Figure 4 shows an exchange of signals between a first application server process 40A and the signaling gateway 34. The application server process 40A sends an "ASP UP" signal indicating that the application server process 40A is operational. However, the ASP-LB 38 is coupled between the application server process 40A and the signaling gateway, and is thus the first to receive the ASP UP signal. In this example, application server process 40A is the first to submit this signal, and therefore the ASP-LB 38 preferably relays the ASP UP signal to the signaling gateway 34. In response thereto, signaling gateways return an "ASP UP ACK" signal. In a system of the preferred embodiments, this ASP UP ACK signal flows to the ASP-LB 38, which in turn relays the signal to application server process 40A, as this was the device that initiated the response. At some later time, application server process 40B issues its ASP UP signal, which propagates to the ASP-LB 38. In particular, the ASP-LB 38 does not relay the ASP UP signal of application server process 40B, as it is the second ASP UP signal to be received (indicated by exchange 44). Instead, the ASP-LB 38 sends an ASP UP ACK signal to the application server 40B. Thus, the signaling gateway 34 has no knowledge that more than one application server processes (and thus application services) are operational. Moreover, neither of the application servers processes 40A,B need to be modified to be operable in the situation where an application server process 38 acting as a load balancer exists. Although not specifically shown in Figure 4, but the underlying principles are the same, the proxy load balancer of the preferred embodiments also consolidates SNM, RKM, ASPTM, ASPSM and MGT messages sent by the plurality of application service processes to the signaling gateway, and conversely consolidates the SNM, RKM, ASPTM, ASPSM and MGT messages sent by the signaling gateway to the application service processes.

Another feature in the communications between signaling gateways and application server processes is a signal from the application server process to the signaling gateway indicating that there has been activation of a particular process, an application service. The exchange of signals of Figure 4 having numeral 46 is indicative of a first exchange of an ASP ACT signal, and its corresponding acknowledgment from the signaling gateway. Any additional application server processes, such as application server process 40B, that generate the activation signal in the preferred embodiments are acknowledged only by the ASP-LB 38, and the signals are not propagated to the signaling gateway 34. Here again, neither the signaling gateway 34, nor the application server processes 40, need to be aware that there is an application server acting as a load balancer coupled between them. From the perspective of the application server processes 40, the ASP-LB's 38 load-balancing function is equivalent to the load balancing function of the signaling gateway. Moreover, because the ASP-LB 38 and the application server processes 40 are preferably owned and administered by the same entity, the load balancing may be enhanced. In particular, the ASP-LB 38 can gauge the relative loading of the application server processes 40 for which it acts as a proxy through any suitable mechanism. These monitoring mechanism may comprises timing the response of an echo command (ping), or through direct communications where the application server process 40 specifically identifies its particular loading. This can be achieved by protocol extension not specified in the Sigtran documents, such as use of the information included with the Sigtran Heartbeat and Heartbeat ACK messages. The ASP-LB 38 load balancing function should conform to the upper layer protocols to dispatch messages to the correct application server process 40. For example, in dispatch SCCP class 1 messages, the ASP-LB 38 uses the SLS and Routing Context (RC) as a routing criteria to the ASPs: every message carrying the same SLS and RC are dispatched to the same ASP. For dispatching TCAP messages, the ASP-LB 38 also uses the TCAP transaction ID to route every message of a single transaction to the same ASP.

After the initialization stages, data may be transferred 50 between the signaling gateway 34 and the application server processes 40 through the ASP-LB 38. The signaling gateway 34 addresses its signaling messages only to ASP-LB 38, and ASP-LB 38 distributes the signaling messages to the various application server processes 40. If, for example, the entity that owns the application server processes 40 wishes to install additional servers, this may be done transparent to the signaling gateway 34, and therefore without the knowledge or even approval of the entity that owns the signaling gateway 34.

Figure 4 also shows an exemplary set of signals exchanged as application server processes 40 begin deactivating application services. In particular, in exchange 52, the application server process 40A sends an "ASP INACT" signal to the ASP-LB 38 indicating deactivation of an application service. Because other application services on other application server processes 40 are still operational, the signal is preferably not propagated to the signaling gateway 34; rather, the ASP-LB 38 returns an "ASP INACT ACK" to the application server process 40A. When the last application server process for which ASP-LB 38 is doing load balancing sends the ASP INACT signal (in Figure 4 application server process 40B, exchange 54), this signal preferably is propagated to the signaling gateway 34. The signaling gateway 34 in turn generates an ASP INACT ACK signal, which the ASP-LB 38 allows to propagate back to the application server process 40B. Likewise with respect to the "ASP DOWN" signals, the first and subsequent (but not the last) set of signals generated are not propagated to the signaling gateway, and instead are acknowledged by the application server process 38. However, the last ASP DOWN set of signals (exchange 58) is propagated through the ASP-LB 38 to the signaling gateway 34. Thus, Figure 4 exemplifies for a standard set of signals exchanged between a signaling gateway and an application server process, how the ASP-LB 38 acting as a load balancer appears as a single application server process to the signaling gateway, and likewise appears as a single signaling gateway for each of the application server processes 40A for which load balancing is accomplished. One of ordinary skill in the art is fully aware of the peculiarities of these upper level message exchange protocols, and, having now been exposed to the use of a proxy load balancer in the context distributing SS7 based signaling messages across non-SS7 networks, could easily program or commission a program to run on an application server process to execute on the ASP-LB 38 load balancing function described.

Figure 4 exemplifies the consolidation and propagation of some of the message that the application server process 38 deals with when acting as a load balancer. In systems without a load balancer, several other categories of messages exchanged between the signaling gateways and the application server processes exist. For example, these categories of messages may comprise SUA management (MGT) messages, signaling network management (SNM) messages, application server process state maintenance (ASPSM) messages, ASP traffic maintenance (ASPTM) messages and routing key management (RKM) messages. SUA management messages propagated to the ASP-LB 38, such as notify messages, are forwarded by the load balancer to each of the application server processes 40. Likewise, error messages in the SUA management messages context may be either processed locally by the application server 38, or forwarded to each of the application server processes 40. Signaling network management messages (such as DUNA, DAVA, SCON, DUPU and DRST) are sent by the signaling gateway to the ASP-LB 38. If the messages do not carry a routing context, the ASP-LB 38 forwards them to each of the application servers 40. If, however, the messages carry a routing context, the load balancer forwards them to the appropriate cluster of application server processes running application services. Again, in the signaling network management message context, the DAUD message is sent by an application service (running on an application server process 40) to the load balancer 38 which can either: forward the message to the signaling gateway; or direly answer to the DAUD by sending the appropriate SNM message. In the second case, the load balancer keeps a database of SS7 destinations status, updated and consolidated according to the SNM messages, it receives from the signaling gateway or gateways.

Routing key management messages are consolidated by the load balancer 38 in a manner similar to the ASP UP signal described with respect to Figure 4. That is, a first routing key management message, such as a registration request, is forwarded by the ASP-LB 38 to the signaling gateway 34. Thereafter, the ASP-LB 38 internally acknowledges further registration requests, and does not forward those to the signaling gateway. Conversely, de-registration requests are accumulated and self-acknowledged by the ASP-LB 38 until the final de-registration request is submitted. Further, the ASP-LB 38 can perform its load balancing operations by any suitable scheme, such as distribution based on loading, a round robin scheme, or some combination thereof.

Figure 5 shows the various layers of the layered protocol communication schemes between the signaling gateway 34, the application server process 38 (acting as a load balancer), and the application server processes 40 (running application services). The signaling gateway 34 communicates with a signaling end point (not shown) over the SS7 network 32. In particular, the signaling gateway 34 communicates with the signaling end point through the use of a MTP2 layer, a MTP3 layer, and a SCCP layer which communicate with a Nodal Interworking Function (NIF). The NIF is, in effect, the highest level software program performing the signaling gateway functions. The application server process 38 has a corresponding set of protocol layers (IP, SCTP and SUA), and also has a NIF layer which performs the load balancing (LB).

In the preferred embodiments, communication between the application server process 38 in a load balancing operation and the application server processes 40 running application services is over a local area network 60 (which may or may not differ in hardware and protocol layers, as will be discussed subsequently). Still referring to Figure 5, communications between the ASP-LB 38 and the application server processes 40 running the application services, in the preferred embodiments, has the same layered protocol as the IP communication between the signaling gateway 34 and the ASP-LB 38. In particular, each of the ASP-LB 38 and application server process 40 have an IP layer, an SCTP layer, and an SUA layer. At the top of the protocol stack is an application (such as TCAP), which is the protocol layer which ultimately interprets the commands and sends responses to the signaling end point (not shown on Figure 5).

Still referring to Figure 5, an alternative embodiment for the protocol layers between the ASP-LB 38 and the application server process 40 is shown. In particular, rather than an SUA layer on top of a SCTP layer, it is possible that the SUA layer may be combined with another communication layer, such as a TCP layer (as shown in parenthesis in Figure 5). In this alternative embodiment, the application server process 40 runs a TCP layer below an SUA layer. While SCTP is preferred, and TCP is an alternative embodiment, one of ordinary skill in the art, now understanding the function of the application server process acting as the load balancer in the IP portion of a switched circuit telephone network could easily devise many communication systems and protocols to facilitate the transfers of SS7 switching signals across ASP-LB 38, the application server processes 40, and the IP network. Further, other embodiments may use other Sigtran adaptation layers such as M3UA, TUA and the like.

The foregoing discussion is premised upon one of ordinary skill in the art having a working understanding of the character and format of switching signals in the SS7 network, as well as the character and nature of converting SS7 signals for transport across IP networks. For additional information regarding implementing SS7 switching over IP networks, reference may be had to the International Engineering Task Force (IETF) working drafts titled "Signaling Connecting Control Part User Adaptation Layer (SUA)" (Draft - IETF - Sigtran - SUA - 13.Txt, Expires October 4, 2002) available from the IETF website at www.ietf.org,. Likewise, reference may be had to the IETF draft titled "SS7 MTP3 - User Adaptation Layer (M3UA)" (Draft - IETF - Sigtran - M3UA - 11.txt, expires June 2002), available from the IETF website at www.ietf.org, It is noted that each of these IETF documents is a work in progress and subject to change; however, these documents exemplify to one of ordinary skill in the art the changes necessary from a standard SS7 signaling system to be implemented in an IP network context. For additional information regarding the SCTP layer of the transfer protocols, reference may be had to the International Engineering Consortium document titled "SS7 Over IP Signaling Transport and SCTP," which is available from the IEC website at www.iec.org.

## Claims

1. A method of operating a switched circuit telephone network comprising:
coupling a telephone switch (30) to a signaling gateway (34) across a signaling system 7 (SS7) network (32);
coupling the signaling gateway (34) to a plurality of application server processes (40A, 40B, 40C) across an Internet Protocol, abbreviated as IP network (36), and wherein the signaling gateway (34) sends signaling messages to the application server processes (40A, 40B, 40C) across the IP network (36); **characterized by**
coupling a load balancer (38) between the signaling gateway (34) and the application server processes (40A, 40B, 40C), the load balancer (38) adapted to distribute the signaling messages from the signaling gateway to the plurality of application server processes (40A, 40B, 40C) wherein the load balancer (38) is adapted to consolidate Routing Key Management, abbreviated as RKM, Application Server Process Traffic Maintenance, abbreviated as ASPTM, and Application Server Process State Maintenance, abbreviated as ASPSM, messages sent by the plurality of application server processes (40A, 40B, 40C) to the signaling gateway (34) so that the load balancer (38) appears as a single signaling gateway (34) to the application server processes (40A, 40B, 40C) and the load balancer (38) appears as a single application server process (40A, 40B, 40C) to the signaling gateway (34), the consolidation comprising:
on receipt of a ASP UP signal, ASP ACT signal or Routing Key registration request message from one of the application server processes (40A, 40B, 40C), the load balancer (38) forwarding that message to the signaling gateway and thereafter acknowledging further ASP UP signal, ASP ACT signal or Routing Key registration request messages from others of the application server processes (40A, 40B, 40C); and the load balancer (38) accumulating and acknowledging ASP DOWN signal, ASP INACT signal or Routing Key deregistration requests received from any of the application server processes (40A, 40B, 40C) until a final ASP DOWN signal, ASP INACT signal or Routing Key deregistration request is received from one of the application server processes (40A, 40B, 40C) and forwarding such final ASP DOWN signal, ASP INACT signal or Routing Key deregistration request to the signaling gateway (34).

2. The method as defined in claim 1 wherein the load balancer (38) is further adapted to distribute signaling messages from the signaling gateway (34) to the plurality of the application server processes (40A, 40B, 40C) based, at least in part, on a loading of each of the application server processes (40A, 40B, 40C).

3. The method as defined in claim 2 further comprising:
determining, by the load balancer (38), the respective loading of each of the application server processes (40A, 40B, 40C); and
sending the signaling messages to the application server processes (40A, 40B, 40C) least heavily loaded.

4. The method as defined in claim 2 or claim 3 wherein determining the loading further comprises sending an echo command from the load balancer (38) to one of the plurality of application server processes (40A, 40B, 40C).

5. The method as defined in claim 4 further comprising timing how long it takes the one of the plurality of application server processes (40A, 40B, 40C) to respond to the echo command.

6. The method as defined in claim 5 further comprises using an ICMP echo message (ping).

7. The method as defined in claim 6 further comprising using Sigtran heartbeat and heartbeat acknowledgement messages.

8. The method as defined in claim 2 or claim 3 wherein determining the loading further comprises:
sending a request, by the load balancer (38), for one of the plurality of application server processes (40A, 40B, 40C) to return an indication of current loading; and
returning, by the one of the plurality of application server processes (40A, 40B, 40C), the indication of current loading.

9. The method as defined in claim 8 wherein the sending and returning steps further comprise using Sigtran heartbeat and heartbeat acknowledgement messages.

10. The method as defined in any preceding claim wherein the load balancer (38) is further adapted to distribute signaling messages from the signaling gateway (34) to the plurality of the application server processes (40A, 40B, 40C) sequentially according to each message's SLS.

11. The method as defined in claim 1 further comprising coupling a second load balancer (38B) between the signaling gateway (34) and the application server processes (40A, 40B, 40C), the second load balancer (38B) adapted to distribute the signaling messages from the signaling gateway (34) to the plurality of application server processes (40A, 40B, 40C).

12. A switched circuit telephone network comprising:
a signaling end point (SEP) coupled to at least one telephone;
a signaling gateway (34) coupled to the Signaling End Point and a plurality of application server processes (40A, 40B, 40C) by way of a layered protocol network having Internet Protocol (IP) as the network layer, **characterized by**;
a load balancer (38) coupled to the signaling gateway (34)
a plurality of application server processes (40A, 40B, 40C) coupled to the load balancer (38) by way of a layered protocol network having Internet Protocol (IP) as the network layer; and
wherein the load balancer (38) relays a message from the signaling gateway (34) to one of the application server processes (40A, 40B, 40C), and wherein the application server process that receives the message is selected by the load balancer (38) based on a message distribution system, wherein the load balancer (38) is adapted to consolidate Routing Key Management abbreviated as **RKM**, Application State Process Traffic Maintenance, abbreviated as ASPTM, and Application Process State Maintenance abbreviated as ASPSM messages sent by the plurality of application server processes (40A, 40B, 40C) to the signaling gateway (34) so that the load balancer (38) appears as a single signaling gateway (34) to the application server processes (40A, 40B, 40C) and the load balancer (38) appears as a single application server process (40A, 40B, 40C) to the signaling gateway (34), the consolidation comprising: on receipt of a first ASP UP signal, ASP ACT signal or Routing Key registration request message from one of the application server processes (40A, 40B, 40C), the load balancer (38) forwarding that message to the signaling gateway and thereafter acknowledging further ASP UP signal, ASP ACT signal or Routing Key registration request messages from others of the application server processes (40A, 40B, 40C); and the load balancer (38) accumulating and acknowledging ASP DOWN signal, ASP INACT signal or Routing Key deregistration requests received from any of the application server processes (40A, 40B, 40C) until a final ASP DOWN signal, ASP INACT signal or Routing Key deregistration request is received from one of the application server processes (40A, 40B, 40C) and forwarding such final ASP DOWN signal, ASP INACT signal, or Routing Key deregistration request to the signaling gateway (34).

13. The switched circuit telephone network as defined in claim 12 wherein the load balancer (38) is further adapted to relay the message from the signaling gateway (34) to one of the application server processes (40A, 40B, 40C) based on a round-robin message distribution system.

14. The switched circuit telephone network as defined in claim 12 wherein the load balancer (38) is further adapted to relay the message from the signaling gateway (34) to one of the application server processes (40A, 40B, 40C) based on Transaction Capabilities Application part (TCAP) message transaction identification number.

15. The switched circuit telephone network as defined in claim 12 wherein the load balancer (38) is further adapted to relay the message from the signaling gateway (34) to one of the application server processes (40A, 40B, 40C) based on loading of the application servers.

16. The switched circuit telephone network as defined in claim 15 wherein the layered protocol network further comprises a Stream Control Transmission Protocol further referred to as SCTP, layer as the transport layer.

17. The switched circuit telephone network as defined in claim 16 wherein the layered protocol network further comprises SUA as the user adaptation layer operating on top of the SCTP layer.

18. The switched circuit telephone network as defined in claim 16 wherein the layered protocol network further comprises M3UA as the user adaptation layer operating on top of the SCTP layer.

19. The switched circuit telephone network as defined in claim 16 wherein the layered protocol network further comprises TUA as the user adaptation layer operating on top of the SCTP layer.

20. The switched circuit telephone network as defined in claim 15 wherein the layered protocol network further comprises a Transmission Control Protocol (TCP) as the transport layer.

21. The switched circuit telephone network as defined in claim 20 wherein the layered protocol network further comprises SUA as the user adaptation layer operating on top of the TCP layer.

22. The switched circuit telephone network as defined in claim 20 wherein the layered protocol network further comprises M3UA as the user adaptation layer operating on top of the TCP layer.

23. The switched circuit telephone network as defined in claim 20 wherein the layered protocol network further comprises TUA as the user adaptation layer operating on top of the TCP layer.

24. The switched circuit telephone network as defined in claim 12 wherein the signaling gateway (34) couples to the SEP by way of a signaling system 7 (SS7) network.

25. The switched circuit telephone network as defined in claim 12 wherein the load balancer (38) couples to the application server processes (40A, 40B, 40C) by way of an Internet Protocol (IP) network.

26. The switched circuit telephone network as defined in claim 12 further comprising:
a second load balancer (38) coupled to the signaling gateway (34); and
wherein the second load balancer (38) relays a message from the signaling gateway (34) to one of the application server processes (40A, 40B, 40C), and wherein the application server process that receives the message is selected by the second load balancer (38) based on a message distribution system.

27. The method as defined in claim 1 wherein the signaling message sent from the signaling gateway (34) to one of the plurality of application server processes (40A, 40B, 40C) further comprises a toll free number translation signaling message.

28. The method as defined in claim 1 wherein the signaling message sent from the signaling gateway (34) to one of the plurality of application server processes (40A, 40B, 40C) further comprises a request for information from a home location register maintained by the application server processes (40A, 40B, 40C).

29. The method as defined in claim 1 wherein the signaling message sent from the signaling gateway (34) to one of the plurality of application server processes (40A, 40B, 40C) further comprises a request for information from a visitor location register maintained by the application server processes (40A, 40B, 40C) .

30. The method as defined in claim 1 wherein forwarding the signaling message from the load balancing system to one of the plurality of application server processes (40A, 40B, 40C) further comprises forwarding the signaling message across a local area network.

31. The method as defined in claim 30 wherein forwarding the signaling message across a local area network further comprises forwarding the signaling message across a network having a layered network using Internet Protocol as the network layer.

32. The method as defined in claim 31 further comprises using Stream Control Transmission Protocol (SCTP) as the transport layer, and operating an SUA layer on top of the SCTP transport layer.

33. The method as defined in claim 32 further comprises using Stream Control Transmission Protocol (SCTP) as the transport layer, and operating an M3UA layer on top of the SCTP transport layer.

34. The method as defined in claim 32 further comprises using Stream Control Transmission Protocol (SCTP) as the transport layer, and operating an TUA layer on top of the SCTP transport layer.

35. The method as defined in claim 32 further comprises using Transmission Control Protocol (TCP) as the transport layer, and operating an SUA layer on top of the TCP transport layer.

36. The method as defined in claim 32 further comprises using Transmission Control Protocol (TCP) as the transport layer, and operating an M3UA layer on top of the TCP transport layer.

37. The method as defined in claim 32 further comprises using Transmission Control Protocol (TCP) as the transport layer, and operating an TUA layer on top of the TCP transport layer.

38. A load balancer (38) for use in a method as claimed in any of claims 1 to 11 between the signaling gateway (34) and the application server processes (40A, 40B, 40C), the load balancer (38) being adapted to distribute the signaling messages from the signaling gateway to the plurality of application server processes (40A, 40B, 40C) wherein the load balancer (38) is adapted to consolidate Routing Key Management abbreviated as RKM, Application State Process Traffic Maintenance abbreviated as ASPTM, and Application Process State Maintenance abbreviated as ASPSM messages sent by the plurality of application server processes (40A, 40B, 40C) to the signaling gateway (34) so that the load balancer (38) appears as a single signaling gateway (34) to the application server processes (40A, 40B, 40C) and the load balancer (38) appears as a single application server process (40A, 40B, 40C) to the signaling gateway (34), the consolidation comprising: on receipt of a first ASP UP signal, ASP ACT signal or Routing Key registration request message from one of the application server processes (40A, 40B, 40C), the load balancer (38) forwarding that message to the signaling gateway and thereafter acknowledging further ASP UP signal, ASP ACT signal or Routing Key registration request messages from others of the application server processes (40A, 40B, 40C); and the load balancer (38) accumulating and acknowledging ASP DOWN signal, ASP INACT signal or Routing Key deregistration requests received from any of the application server processes (40A, 40B, 40C) until a final ASP DOWN signal, ASP INACT signal or Routing Key deregistration request is received from one of the application server processes (40A, 40B, 40C) and forwarding such final ASP DOWN signal, ASP INACT signal or Routing Key deregistration request to the signaling gateway (34).

## Patentansprüche

1. Ein Verfahren zum Betreiben eines Wählleitungstelefonnetzwerks, das folgende Schritte umfasst:
Koppeln eines Telefonschalters (30) mit einem Signalisierungsnetzübergang (34) über ein Signalisierungssystem-7- (SS7-) Netzwerk (32);
Koppeln des Signalisierungsnetzübergangs (34) mit einer Mehrzahl von Anwendungsserverprozessen (40A, 40B, 40C) über ein Internetprotokoll, abgekürzt als IP-Netzwerk (36), wobei der Signalisierungsnetzübergang (34) über das IP-Netzwerk (36) Signalisierungsmitteilungen an die Anwendungsserverprozesse (40A, 40B, 40C) sendet;
**gekennzeichnet durch**
Koppeln eines Lastausgleichselements (38) zwischen dem Signalisierungsnetzübergang (34) und den Anwendungsserverprozessen (40A, 40B, 40C), wobei das Lastausgleichselement (38) angepasst ist, um die Signalisierungsmitteilungen von dem Signalisierungsnetzübergang zu der Mehrzahl von Anwendungsserverprozessen (40A, 40B, 40C) zu verteilen, wobei das Lastausgleichselement (38) angepasst ist, um Routing-Key-Management-, abgekürzt als RKM, Application-Server-Process-Traffic-Maintenance-, abgekürzt als ASPTM, und Application-Server-Process-State-Maintenance-, abgekürzt als ASPSM, Mitteilungen zu konsolidieren, die **durch** die Mehrzahl von Anwendungsserverprozessen (40A, 40B, 40C) an den Signalisierungsnetzübergang (34) gesendet werden, so dass das Lastausgleichselement (38) für die Anwendungsserverprozesse (40A, 40B, 40C) als ein einziger Signalisierungsnetzübergang (34) erscheint, und das Lastausgleichselement (38) für den Signalisierungsnetzübergang (34) als ein einziger Anwendungsserverprozess (40A, 40B, 40C) erscheint, wobei die Konsolidierung folgende Schritte umfasst:
auf den Empfang einer ASP-UP-Signal-, einer ASP-ACT-Signal- oder einer Routing-Key-Registrierungs-Anforderungs-Mitteilung von einem der Anwendungsserverprozesse (40A, 40B, 40C) hin, Weiterleiten dieser Mitteilung **durch** das Lastausgleichselement (38) an den Signalisierungsnetzübergang, und danach Bestätigen weiterer ASP-UP-Signal-, ASP-ACT-Signal- oder Routing-Key-Registrierungs-Anforderungs-Mitteilungen von anderen der Anwendungsserverprozesse (40A, 40B, 40C); und Sammeln und Bestätigen von ASP-DOWN-Signal-, ASP-INACT-Signal- oder Routing-Key-Deregistrierungs-Anforderungen, die von einem der Anwendungsserverprozesse (40A, 40B, 40C) empfangen werden, **durch** das Lastausgleichselement (38), bis eine endgültige ASP-DOWN-Signal-, ASP-INACT-Signal- oder Routing-Key-Deregistrierungs-Anforderung von einem der Anwendungsserverprozesse (40A, 40B, 40C) empfangen wird, und Weiterleiten einer solchen endgültigen ASP-DOWN-Signal-, ASP-INACT-Signal- oder Routing-Key-Deregistrierungs-Anforderung an den Signalisierungsnetzübergang (34).

2. Das Verfahren gemäß Anspruch 1, bei dem das Lastausgleichselement (38) ferner angepasst ist, um Signalisierungsmitteilungen von dem Signalisierungsnetzübergang (34) zu der Mehrzahl der Anwendungsserverprozesse (40A, 40B, 40C) zu verteilen, basierend zumindest teilweise auf einer Belastung von jedem der Anwendungsserverprozesse (40A, 40B, 40C).

3. Das Verfahren gemäß Anspruch 2, das ferner folgenden Schritt umfasst:
Bestimmen der jeweiligen Belastung von jedem der Anwendungsserverprozesse (40A, 40B, 40C) durch das Lastausgleichselement (38); und
Senden der Signalisierungsmitteilungen an die Anwendungsserverprozesse (40A, 40B, 40C), die am wenigsten stark belastet sind.

4. Das Verfahren gemäß Anspruch 2 oder Anspruch 3, bei dem das Bestimmen der Belastung ferner das Senden eines Echobefehls von dem Lastausgleichselement (38) an einen der Mehrzahl von Anwendungsserverprozessen (40A, 40B, 40C) umfasst.

5. Das Verfahren gemäß Anspruch 4, das ferner eine Zeitgebung umfasst, wie lang einer der Mehrzahl von Anwendungsserverprozessen (40A, 40B, 40C) benötigt, um auf den Echobefehl anzusprechen.

6. Das Verfahren gemäß Anspruch 5, das ferner das Verwenden einer ICMP-Echomitteilung (Ping) umfasst.

7. Das Verfahren gemäß Anspruch 6, das ferner die Verwendung von Sigtran-Herzschlag- und Herzschlag-Bestätigungsmitteilungen umfasst.

8. Das Verfahren gemäß Anspruch 2 oder Anspruch 3, bei dem das Bestimmen der Belastung ferner folgende Schritte umfasst:
Senden einer Anforderung für einen der Mehrzahl von Anwendungsserverprozessen (40A, 40B, 40C) durch das Lastausgleichselement (38), um eine Anzeige einer aktuellen Belastung zurückzusenden; und
Zurücksenden, durch den einen der Mehrzahl von Anwendungsserverprozessen (40A, 40B, 40C), der Anzeige der aktuellen Belastung.

9. Das Verfahren gemäß Anspruch 8, bei dem die Sende- und Zurücksendeschritte ferner die Verwendung von Sigtran-Herzschlag- und Herzschlag-Bestätigungsmitteilungen umfassen.

10. Das Verfahren gemäß einem der vorhergehenden Ansprüche, bei dem das Lastausgleichselement (38) ferner angepasst ist, um Signalisierungsmitteilungen von dem Signalisierungsnetzübergang (34) nacheinander gemäß der SLS jeder Mitteilung zu der Mehrzahl der Anwendungsserverprozesse (40A, 40B, 40C) zu verteilen.

11. Das Verfahren gemäß Anspruch 1, das ferner das Koppeln eines zweiten Lastausgleichelements (38B) zwischen dem Signalisierungsnetzübergang (34) und den Anwendungsserverprozessen (40A, 40B, 40C) umfasst, wobei das zweite Lastausgleichselement (38B) angepasst ist, um die Signalisierungsmitteilungen von dem Signalisierungsnetzübergang (34) zu der Mehrzahl von Anwendungsserverprozessen (40A, 40B, 40C) zu verteilen.

12. Ein Wählleitungstelefonnetzwerk, das folgende Merkmale umfasst:
einen Signalisierungsendpunkt (SEP), der mit zumindest einem Telefon gekoppelt ist;
einen Signalisierungsnetzübergang (34), der mit dem Signalisierungsendpunkt und einer Mehrzahl von Anwendungsserverprozessen (40A, 40B, 40C) gekoppelt ist, durch ein Schichtprotokollnetzwerk, das das Internetprotokoll (IP) als Netzwerkschicht aufweist, **gekennzeichnet durch**:
ein Lastausgleichselement (38), das mit dem Signalisierungsnetzübergang (34) gekoppelt ist,
eine Mehrzahl von Anwendungsserverprozessen (40A, 40B, 40C), die mit dem Lastausgleichselement (38) **durch** ein Schichtprotokollnetzwerk gekoppelt sind, das das Internetprotokoll (IP) als Netzwerkschicht aufweist; und
wobei das Lastausgleichselement (38) eine Mitteilung von dem Signalisierungsnetzübergang (34) zu einem der Anwendungsserverprozesse (40A, 40B, 40C) weiterleitet, und wobei der Anwendungsserverprozess, der die Mitteilung empfängt, **durch** das Lastausgleichselement (38) basierend auf einem Mitteilungsverteilungssystem ausgewählt wird, wobei das Lastausgleichssystem (38) angepasst ist, um Routing-Key-Management-, abgekürzt als RKM, Application-State-Process-Traffic-Maintenance-, abgekürzt als ASPTM, und Application-Process-State-Maintenance-, abgekürzt als ASPSM, Mitteilungen zu konsolidieren, die **durch** die Mehrzahl von Anwendungsserverprozessen (40A, 40B, 40C) an den Signalisierungsnetzübergang (34) gesendet werden, so dass das Lastausgleichselement (38) für die Anwendungsserverprozesse (40A, 40B, 40C) als ein einziger Signalisierungsnetzübergang (34) erscheint, und das Lastausgleichselement (38) für das Signalisierungsnetzwerk (34) als ein einziger Anwendungsserverprozess (40A, 40B, 40C) erscheint, wobei die Konsolidierung folgende Schritte umfasst:
auf den Empfang einer ersten ASP-UP-Signal-, ASP-ACT-Signal- oder einer Routing-Key-Registrierungs-Anforderungs-Mitteilung von einem der Anwendungsserverprozesse (40A, 40B, 40C) hin, Weiterleiten dieser Mitteilung an den Signalisierungsnetzübergang **durch** das Lastausgleichselement (38), und danach Bestätigen weiterer ASP-UP-Signal-, ASP-ACT-Signal- oder Routing-Key-Registrierungs-Anforderungs-Mitteilungen von anderen der Anwendungsserverprozesse (40A, 40B, 40C); und Sammeln und Bestätigen von ASP-DOWN-Signal-, ASP-INACT-Signal- oder Routing-Key-Deregistrierungs-Anforderungen, die von einem der Anwendungsserverprozesse (40A, 40B, 40C) empfangen werden, **durch** das Lastausgleichselement (38), bis eine endgültige ASP-DOWN-Signal-, ASP-INACT-Signal- oder Routing-Key-Deregistrierungs-Anforderung von einem der Anwendungsserverprozesse (40A, 40B, 40C) empfangen wird, und Weiterleiten einer solchen endgültigen ASP-DOWN-Signal-, ASP-INACT-Signal- oder Routing-Key-Deregistrierungs-Anforderung an den Signalisierungsnetzübergang (34).

13. Das Wählleitungstelefonnetzwerk gemäß Anspruch 12, bei dem das Lastausgleichselement (38) ferner angepasst ist, um die Mitteilung von dem Signalisierungsnetzübergang (34) basierend auf einem Round-Robin-Mitteilungs-Verteilungssystem an einen der Anwendungsserverprozesse (40A, 40B, 40C) weiterzuleiten.

14. Das Wählleitungstelefonnetzwerk gemäß Anspruch 12, bei dem das Lastausgleichselement (38) ferner angepasst ist, um die Mitteilung von dem Signalisierungsnetzübergang (34) basierend auf einer Transaction-Capabilities-Application-Part- (TCAP-) Mitteilungstransaktionsidentifikationsnummer an einen der Anwendungsserverprozesse (40A, 40B, 40C) weiterzuleiten.

15. Das Wählleitungstelefonnetzwerk gemäß Anspruch 12, bei dem das Lastausgleichselement (38) ferner angepasst ist, um die Mitteilung von dem Signalisierungsnetzübergang (34) an einen der Anwendungsserverprozesse (40A, 40B, 40C) weiterzuleiten, basierend auf der Belastung der Anwendungsserver.

16. Das Wählleitungstelefonnetzwerk gemäß Anspruch 15, bei dem das Schichtprotokollnetzwerk ferner eine Stream-Control-Transmission-Protocol-Schicht, ferner als SCTP-Schicht bezeichnet, als die Transportschicht umfasst.

17. Das Wählleitungstelefonnetzwerk gemäß Anspruch 16, bei dem das Schichtprotokollnetzwerk ferner SUA als die Benutzeranpassungsschicht umfasst, die auf der SCTP-Schicht arbeitet.

18. Das Wählleitungstelefonnetzwerk gemäß Anspruch 16, bei dem das Schichtprotokollnetzwerk ferner M3UA als die Benutzeranpassungsschicht umfasst, die auf der SCTP-Schicht arbeitet.

19. Das Wählleitungstelefonnetzwerk gemäß Anspruch 16, bei dem das Schichtprotokollnetzwerk ferner TUA als die Benutzeranpassungsschicht umfasst, die auf der SCTP-Schicht arbeitet.

20. Das Wählleitungstelefonnetzwerk gemäß Anspruch 15, bei dem das Schichtprotokollnetzwerk ferner ein Transmission-Control-Protocol (TCP) als die Transportschicht umfasst.

21. Das Wählleitungstelefonnetzwerk gemäß Anspruch 20, bei dem das Schichtprotokollnetzwerk ferner SUA als die Benutzeranpassungsschicht umfasst, die auf der TCP-Schicht arbeitet.

22. Das Wählleitungstelefonnetzwerk gemäß Anspruch 20, bei dem das Schichtprotokollnetzwerk ferner M3UA als Benutzeranpassungsschicht umfasst, die auf der TCP-Schicht arbeitet.

23. Das Wählleitungstelefonnetzwerk gemäß Anspruch 20, bei dem das Schichtprotokollnetzwerk ferner TUA als die Benutzeranpassungsschicht umfasst, die auf der TCP-Schicht arbeitet.

24. Das Wählleitungstelefonnetzwerk gemäß Anspruch 12, bei dem der Signalisierungsnetzübergang (34) durch ein Signalisierungssystem-7- (SS7-) Netzwerk mit dem SEP koppelt.

25. Das Wählleitungstelefonnetzwerk gemäß Anspruch 12, bei dem das Lastausgleichselement (38) durch ein Internetprotokoll- (IP-) Netzwerk mit dem Anwendungsserverprozess (40A, 40B, 40C) koppelt.

26. Das Wählleitungstelefonnetzwerk gemäß Anspruch 12, das ferner folgende Merkmale umfasst:
ein zweites Lastausgleichselement (38), das mit dem Signalisierungsnetzübergang (34) gekoppelt ist; und
wobei das zweite Lastausgleichselement (38) eine Mitteilung von dem Signalisierungsnetzübergang (34) zu einem der Anwendungsserverprozesse (40A, 40B, 40C) weiterleitet, und wobei der Anwendungsserverprozess, der die Mitteilung empfängt, basierend auf einem Mitteilungsverteilungssystem durch das zweite Lastausgleichselement (38) ausgewählt wird.

27. Das Verfahren gemäß Anspruch 1, bei dem die Signalisierungsmitteilung, die von dem Signalisierungsnetzübergang (34) an einen der Mehrzahl von Anwendungsserverprozessen (40A, 40B, 40C) gesendet wird, ferner eine Gebührenfreie-Rufnummer-Übersetzungs-Signalisierungsmitteilung umfasst.

28. Das Verfahren gemäß Anspruch 1, bei dem die Signalisierungsmitteilung, die von dem Signalisierungsnetzübergang (34) an einen der Mehrzahl von Anwendungsserverprozessen (40A, 40B, 40C) gesendet wird, ferner eine Anforderung nach Informationen von einer Heimatdatei umfasst, die durch die Anwendungsserverprozesse (40A, 40B, 40C) beibehalten wird.

29. Das Verfahren gemäß Anspruch 1, bei dem die Signalisierungsmitteilung, die von dem Signalisierungsnetzübergang (34) an einen der Mehrzahl von Anwendungsserverprozessen (40A, 40B, 40C) gesendet wird, ferner eine Anforderung nach Informationen von einer Besucherdatei umfasst, die durch die Anwendungsserverprozesse (40A, 40B, 40C) beibehalten wird.

30. Das Verfahren gemäß Anspruch 1, bei dem das Weiterleiten der Signalisierungsmitteilung von dem Lastausgleichssystem zu einem der Mehrzahl der Anwendungsserverprozesse (40A, 40B, 40C) ferner das Weiterleiten der Signalisierungsmitteilung über ein lokales Netz umfasst.

31. Das Verfahren gemäß Anspruch 30, bei dem das Weiterleiten der Signalisierungsmitteilung über ein lokales Netz ferner das Weiterleiten der Signalisierungsmitteilung über ein Netz mit einem Schichtnetz umfasst, das das Internetprotokoll als die Netzwerkschicht verwendet.

32. Das Verfahren gemäß Anspruch 31, das ferner das Verwenden von Stream-Control-Transmission-Protocol (SCTP) als die Transportschicht umfasst, und das Betreiben einer SUA-Schicht auf der SCTP-Transportschicht.

33. Das Verfahren gemäß Anspruch 32, das ferner das Verwenden von Stream-Control-Transmission-Protocol (SCTP) als die Transportschicht umfasst, und das Betreiben einer M3UA-Schicht auf der SCTP-Transportschicht.

34. Das Verfahren gemäß Anspruch 32, das ferner das Verwenden von Stream-Control-Transmission-Protocol (SCTP) als die Transportschicht umfasst, und das Betreiben einer TUA-Schicht auf der SCTP-Transportschicht.

35. Das Verfahren gemäß Anspruch 32, das ferner das Verwenden von Transmission-Control-Protocol (TCP) als die Transportschicht umfasst, und das Betreiben einer SUA-Schicht auf der TCP-Transportschicht.

36. Das Verfahren gemäß Anspruch 32, das ferner das Verwenden von Transmission-Control-Protocol (TCP) als die Transportschicht umfasst, und das Betreiben einer M3UA-Schicht auf der TCP-Transportschicht.

37. Das Verfahren gemäß Anspruch 32, das ferner das Verwenden von Transmission-Control-Protocol (TCP) als die Transportschicht umfasst, und das Betreiben einer TUA-Schicht auf der TCP-Transportschicht.

38. Ein Lastausgleichselement (38) für die Verwendung bei einem Verfahren gemäß einem der Ansprüche 1 bis 11 zwischen dem Signalisierungsnetzübergang (34) und den Anwendungsserverprozessen (40A, 40B, 40C), wobei das Lastausgleichselement (38) angepasst ist, um die Signalisierungsmitteilungen von dem Signalisierungsnetzübergang zu der Mehrzahl von Anwendungsserverprozessen (40A, 40B, 40C) zu übertragen, wobei das Lastausgleichselement (38) angepasst ist, um Routing-Key-Management-, abgekürzt als RKM, Application-State-Process-Traffic-Maintenance-, abgekürzt als ASPTM, und Application-Process-State-Maintenance-, abgekürzt als ASPSM, Mitteilungen zu konsolidieren, die durch die Mehrzahl von Anwendungsserverprozessen (40A, 40B, 40C) an den Signalisierungsnetzübergang (34) gesendet werden, so dass das Lastausgleichselement (38) für die Anwendungsserverprozesse (40A, 40B, 40C) als ein einziger Signalisierungsnetzübergang (34) erscheint, und das Lastausgleichselement (38) für den Signalisierungsnetzübergang (34) als ein einziger Anwendungsserverprozess (40A, 40B, 40C) erscheint, wobei die Konsolidierung folgende Schritte umfasst:
auf den Empfang einer ersten ASP-UP-Signal-, ASP-ACT-Signal-, oder Routing-Key-Registrierungs-Anforderungs-Mitteilung von einem der Anwendungsserverprozesse (40A, 40B, 40C) hin, Weiterleiten dieser Mitteilung an den Signalisierungsnetzübergang durch das Lastausgleichselement (38), und danach Bestätigen weiterer ASP-UP-Signal-, ASP-ACT-Signal- oder Routing-Key-Registrierungs-Anforderungs-Mitteilungen von anderen der Anwendungsserverprozesse (40A, 40B, 40C); und Sammeln und Bestätigen von ASP-DOWN-Signal-, ASP-INACT-Signal- oder Routing-Key-Deregistrierungs-Anforderungen, die von einem der Anforderungsserverprozesse (40A, 40B, 40C) empfangen werden, durch das Lastausgleichselement (38), bis eine endgültige ASP-DOWN-Signal-, ASP-INACT-Signal- oder Routing-Key-Deregistrierungs-Anforderung von einem der Anwendungsserverprozesse (40A, 40B, 40C) empfangen wird, und Weiterleiten einer solchen endgültigen ASP-DOWN-Signal-, ASP-INACT-Signal- oder Routing-Key-Deregistrierungs-Anforderung an den Signalisierungsnetzübergang (34).

## Revendications

1. Procédé de fonctionnement d'un réseau téléphonique à commutation de circuits comprenant :
le couplage d'un commutateur téléphonique (30) à une passerelle de signalisation (34) sur un réseau de système de signalisation 7 (SS7) (32) ;
le couplage de la passerelle de signalisation (34) à une pluralité de processus de serveurs d'applications (40A, 40B, 40C) sur un protocole Internet, abrégé par réseau IP (36), et dans lequel la passerelle de signalisation (34) envoie des messages de signalisation aux processus de serveurs d'applications (40A, 40B, 40C) sur le réseau IP (36) ; **caractérisé par**
le couplage d'un répartiteur de charge (38) entre la passerelle de signalisation (34) et les processus de serveurs d'applications (40A, 40B, 40C), le répartiteur de charge (38) étant adapté à répartir les messages de signalisation provenant de la passerelle de signalisation vers la pluralité de processus de serveurs d'applications (40A, 40B, 40C), dans lequel le répartiteur de charge (38) est adapté à consolider les messages de Gestion des Clés de Routage (Routing Key Management), abrégée par RKM, Maintenance du Trafic de Processus de Serveurs d'applications (Application Server Process Traffic Maintenance), abrégée par ASPTM, et Maintenance de l'État des Processus de Serveurs d'applications (Application Server Process State Maintenance), abrégée par ASPSM, envoyés par la pluralité de processus de serveurs d'applications (40A, 40B, 40C) à la passerelle de signalisation (34) de telle sorte que le répartiteur de charge (38) apparaisse comme une passerelle de signalisation unique (34) aux processus de serveurs d'applications (40A, 40B, 40C) et que le répartiteur de charge (38) apparaisse comme un processus de serveur d'application unique (40A, 40B, 40C) à la passerelle de signalisation (34), la consolidation comprenant :
lors de la réception d'un signal ASP UP, d'un signal ASP ACT ou d'un message de requête d'enregistrement de clé de routage provenant de l'un des processus de serveurs d'applications (40A, 40B, 40C), l'acheminement de ce message par le répartiteur de charge (38) à la passerelle de signalisation et après cela, l'acquittement d'un autre signal ASP UP, signal ASP ACT ou de messages de requête d'enregistrement de clé de routage provenant d'autres des processus de serveurs d'applications (40A, 40B, 40C) ; et l'accumulation et l'acquittement par le répartiteur de charge (38) du signal ASP DOWN, du signal ASP INACT ou des requêtes de radiation de clé de routage reçues depuis l'un quelconque des processus de serveurs d'applications (40A, 40B, 40C) jusqu'à ce qu'un signal final ASP DOWN, un signal ASP INACT ou une requête de radiation de clé de routage soit reçu depuis l'un des processus de serveurs d'applications (40A, 40B, 40C) et l'acheminement de ce signal final ASP DOWN, signal ASP INACT ou requête de radiation de clé de routage vers la passerelle de signalisation (34).

2. Procédé selon la revendication 1, dans lequel le répartiteur de charge (38) est adapté en outre, à répartir des messages de signalisation provenant de la passerelle de signalisation (34) vers la pluralité de processus de serveurs d'applications (40A, 40B, 40C) en se basant, au moins en partie, sur la charge de chacun des processus de serveurs d'applications (40A, 40B, 40C).

3. Procédé selon la revendication 2, comprenant en outre :
la détermination, par le répartiteur de charge (38) de la charge respective de chacun des processus de serveurs d'applications (40A, 40B, 40C) ; et
l'envoi des messages de signalisation aux processus de serveurs d'applications (40A, 40B, 40C) les moins lourdement chargés.

4. Procédé selon la revendication 2 ou la revendication 3, dans lequel la détermination de la charge comprend en outre, l'envoi d'une commande d'écho depuis le répartiteur de charge (38) vers un processus de la pluralité de processus de serveurs d'applications (40A, 40B, 40C).

5. Procédé selon la revendication 4, comprenant en outre le comptage du temps qu'il faut pour qu'un processus de la pluralité de processus de serveurs d'applications (40A, 40B, 40C) réponde à la commande d'écho.

6. Procédé selon la revendication 5, comprenant en outre l'utilisation d'un message d'écho ICMP (ping).

7. Procédé selon la revendication 6, comprenant en outre l'utilisation de messages d'acquittement de battement de coeur Sigtran et de battement de coeur.

8. Procédé selon la revendication 2 ou la revendication 3, dans lequel la détermination de la charge comprend en outre :
l'envoi d'une requête, par le répartiteur de charge (38), pour qu'un processus de la pluralité de processus de serveurs d'applications (40A, 40B, 40C) retourne une indication de la charge courante ; et
le retour, par l'un des processus de la pluralité de processus de serveurs d'applications (40A, 40B, 40C), de l'indication de la charge courante.

9. Procédé selon la revendication 8, dans lequel les étapes d'envoi et de retour comprennent en outre, l'utilisation de messages d'acquittement de battement de coeur Sigtran et de battement de coeur.

10. Procédé selon l'une quelconque des revendications précédentes, dans lequel le répartiteur de charge (38) est adapté en outre, à répartir des messages de signalisation provenant de la passerelle de signalisation (34) vers la pluralité des processus de serveurs d'applications (40A, 40B, 40C) en séquence, conformément à chaque SLS de message.

11. Procédé selon la revendication 1, comprenant en outre le couplage d'un second répartiteur de charge (38B) entre la passerelle de signalisation (34) et les processus de serveurs d'applications (40A, 40B, 40C), le second répartiteur de charge (38B) étant adapté à répartir les messages de signalisation depuis la passerelle de signalisation (34) vers la pluralité de processus de serveurs d'applications (40A, 40B, 40C).

12. Réseau téléphonique à commutation de circuits comprenant :
un point de fin de signalisation (SEP) couplé au moins à un téléphone ;
une passerelle de signalisation (34) couplée au point de fin de signalisation et à une pluralité de processus de serveurs d'applications (40A, 40B, 40C) au moyen d'un réseau de protocole en couches comportant un protocole Internet (IP) en tant que couche réseau, **caractérisé par** ;
un répartiteur de charge (38) couplé à la passerelle de signalisation (34)
une pluralité de processus de serveurs d'applications (40A, 40B, 40C) couplés au répartiteur de charge (38) au moyen d'un réseau de protocole en couches comportant le protocole Internet (IP) en tant que couche réseau ; et
dans lequel le répartiteur de charge (38) relaie un message provenant de la passerelle de signalisation (34) vers l'un des processus de serveurs d'applications (40A, 40B, 40C), et dans lequel le processus de serveur d'application qui reçoit le message est sélectionné par le répartiteur de charge (38) en se basant sur un système de répartition de message, dans lequel le répartiteur de charge (38) est adapté à consolider les messages de Gestion des Clés de Routage (Routing Key Management), abrégée par RKM, Maintenance du Trafic de Processus de Serveurs d'applications (Application Server Process Traffic Maintenance), abrégée par ASPTM, et Maintenance de l'État des Processus d'applications (Application Process State Maintenance), abrégée par ASPSM, envoyés par la pluralité de processus de serveurs d'applications (40A, 40B, 40C) vers la passerelle de signalisation (34) de telle sorte que le répartiteur de charge (38) apparaisse comme une passerelle de signalisation unique (34) aux processus de serveurs d'applications (40A, 40B, 40C) et que le répartiteur de charge (38) apparaisse comme un processus de serveur d'application unique (40A, 40B, 40C) à la passerelle de signalisation (34) la consolidation comprenant :
lors de la réception d'un premier signal ASP UP, d'un signal ASP ACT ou d'un message de requête d'enregistrement de clé de routage provenant de l'un des processus de serveurs d'applications (40A, 40B, 40C), l'acheminement de ce message par le répartiteur de charge (38) à la passerelle de signalisation et après cela, l'acquittement d'un autre signal ASP UP, signal ASP ACT ou de messages de requête d'enregistrement de clé de routage provenant d'autres des processus de serveurs d'applications (40A, 40B, 40C) ; et l'accumulation et l'acquittement par le répartiteur de charge (38) du signal ASP DOWN, du signal ASP INACT ou des requêtes de radiation de clé de routage reçues depuis l'un quelconque des processus de serveurs d'applications (40A, 40B, 40C) jusqu'à ce qu'un signal final ASP DOWN, un signal ASP INACT ou une requête de radiation de clé de routage soit reçu depuis l'un des processus de serveurs d'applications (40A, 40B, 40C) et l'acheminement de ce signal final ASP DOWN, signal ASP INACT ou requête de radiation de clé de routage vers la passerelle de signalisation (34).

13. Réseau téléphonique à commutation de circuits selon la revendication 12, dans lequel le répartiteur de charge (38) est adapté en outre à relayer le message provenant de la passerelle de signalisation (34) vers l'un des processus de serveurs d'applications (40A, 40B, 40C) en se basant sur un système de répartition de messages à tour de rôle.

14. Réseau téléphonique à commutation de circuits selon la revendication 12, dans lequel le répartiteur de charge (38) est adapté en outre, à relayer le message provenant de la passerelle de signalisation (34) vers l'un des processus de serveurs d'applications (40A, 40B, 40C), en se basant sur un numéro d'identification de transaction de message de Sous-système de Gestion de Transactions (Transaction Capabilities Application Part) (TCAP).

15. Réseau téléphonique à commutation de circuits selon la revendication 12, dans lequel le répartiteur de charge (38) est adapté en outre à relayer le message provenant de la passerelle de signalisation (34) vers l'un des processus de serveurs d'applications (40A, 40B, 40C), en se basant sur la charge des serveurs d'applications.

16. Réseau téléphonique à commutation de circuits selon la revendication 15, dans lequel le réseau de protocole en couches comprend en outre une couche de Protocole de Transmission de Contrôle de Courant (Stream Control Transmission Protocol), également appelé SCTP, en tant que couche transport.

17. Réseau téléphonique à commutation de circuits selon la revendication 16, dans lequel le réseau de protocole en couches comprend en outre, SUA, en tant que couche d'adaptation utilisateur opérant sur le haut de la couche SCTP.

18. Réseau téléphonique à commutation de circuits selon la revendication 16, dans lequel le réseau de protocole en couches comprend en outre, M3UA, en tant que couche d'adaptation utilisateur opérant sur le haut de la couche SCTP.

19. Réseau téléphonique à commutation de circuits selon la revendication 16, dans lequel le réseau de protocole en couches comprend en outre, TUA, en tant que couche d'adaptation utilisateur opérant sur le haut de la couche SCTP.

20. Réseau téléphonique à commutation de circuits selon la revendication 15, dans lequel le réseau de protocole en couches comprend en outre, un protocole de Contrôle de Transmission (Transmission Control Protocol) (TCP) en tant que couche transport.

21. Réseau téléphonique à commutation de circuits selon la revendication 20, dans lequel le réseau de protocole en couches comprend en outre, SUA, en tant que couche d'adaptation utilisateur opérant sur le haut de la couche TCP.

22. Réseau téléphonique à commutation de circuits selon la revendication 20, dans lequel le réseau de protocole en couches comprend en outre, M3UA, en tant que couche d'adaptation utilisateur opérant sur le haut de la couche TCP.

23. Réseau téléphonique à commutation de circuits selon la revendication 20, dans lequel le réseau de protocole en couches comprend en outre, TUA, en tant que couche d'adaptation utilisateur opérant sur le haut de la couche TCP.

24. Réseau téléphonique à commutation de circuits selon la revendication 12, dans lequel la passerelle de signalisation (34) est couplée au SEP au moyen d'un réseau de système de signalisation 7 (SS7).

25. Réseau téléphonique à commutation de circuits selon la revendication 12, dans lequel le répartiteur de charge (38) est couplé aux processus de serveurs d'applications (40A, 40B, 40C) au moyen d'un protocole Internet (IP).

26. Réseau téléphonique à commutation de circuits selon la revendication 12, comprenant en outre :
un second répartiteur de charge (38) couplé à la passerelle de signalisation (34) ; et
dans lequel le second répartiteur de charge (38) relaie un message provenant de la passerelle de signalisation (34) vers l'un des processus de serveurs d'applications (40A, 40B, 40C), et dans lequel le processus de serveur d'application qui reçoit le message est sélectionné par le second répartiteur de charge (38) en se basant sur un système de répartition de message.

27. Procédé selon la revendication 1, dans lequel le message de signalisation envoyé par la passerelle de signalisation (34) à un processus de la pluralité de processus de serveurs d'applications (40A, 40B, 40C) comprend en outre, un message de signalisation de traduction de numéro gratuit.

28. Procédé selon la revendication 1, dans lequel le message de signalisation envoyé par la passerelle de signalisation (34) à un processus de la pluralité de processus de serveurs d'applications (40A, 40B, 40C) comprend en outre une requête d'informations d'un enregistreur de localisation nominal géré par les processus de serveurs d'applications (40A, 40B, 40C).

29. Procédé selon la revendication 1, dans lequel le message de signalisation envoyé par la passerelle de signalisation (34) à un processus de la pluralité de processus de serveurs d'applications (40A, 40B, 40C) comprend en outre, une requête d'informations d'un enregistreur de localisation des visiteurs géré par les processus de serveurs d'applications (40A, 40B, 40C).

30. Procédé selon la revendication 1, dans lequel l'acheminement du message de signalisation depuis le système d'équilibrage de charge vers un processus de la pluralité de processus de serveurs d'applications (40A, 40B, 40C) comprend en outre, l'acheminement du message de signalisation sur un réseau local.

31. Procédé selon la revendication 30, dans lequel l'acheminement du message de signalisation sur un réseau local comprend en outre, l'acheminement du message de signalisation sur un réseau ayant une couche réseau utilisant le protocole Internet en tant que couche réseau.

32. Procédé selon la revendication 31, comprenant en outre l'utilisation d'un Protocole de Transmission de Contrôle de Courant (Stream Control Transmission Protocol) (SCTP) en tant que couche transport, et l'opération d'une couche SUA en haut de la couche transport SCTP.

33. Procédé selon la revendication 32, comprenant en outre l'utilisation d'un Protocole de Transmission de Contrôle de Courant (Stream Control Transmission Protocol) (SCTP) en tant que couche transport, et l'opération d'une couche M3UA en haut de la couche transport SCTP.

34. Procédé selon la revendication 32, comprenant en outre l'utilisation d'un Protocole de Transmission de Contrôle de Courant (Stream Control Transmission Protocol) (SCTP) en tant que couche transport, et l'opération d'une couche TUA en haut de la couche transport SCTP.

35. Procédé selon la revendication 32, comprenant en outre l'utilisation d'un protocole de Contrôle de Transmission (Transmission Control Protocol) (TCP) en tant que couche transport, et l'opération d'une couche SUA en haut de la couche transport TCP.

36. Procédé selon la revendication 32, comprenant en outre l'utilisation d'un protocole de Contrôle de Transmission (Transmission Control Protocol) (TCP) en tant que couche transport, et l'opération d'une couche M3UA en haut de la couche transport TCP.

37. Procédé selon la revendication 32, comprenant en outre l'utilisation d'un protocole de Contrôle de Transmission (Transmission Control Protocol) (TCP) en tant que couche transport, et l'opération d'une couche TUA en haut de la couche transport TCP.

38. Répartiteur de charge (38) destiné à être utilisé dans un procédé selon l'une quelconque des revendications 1 à 11, entre la passerelle de signalisation (34) et les processus de serveurs d'applications (40A, 40B, 40C), le répartiteur de charge (38) étant adapté à répartir les messages de signalisation depuis la passerelle de signalisation vers la pluralité de processus de serveurs d'applications (40A, 40B, 40C), dans lequel le répartiteur de charge (38) est adapté à consolider les messages de Gestion des Clés de Routage (Routing Key Management), abrégée par RKM, Maintenance du Trafic de Processus de Serveurs d'applications (Application Server Process Traffic Maintenance), abrégée par ASPTM, et Maintenance de l'État des Processus d'applications (Application Process State Maintenance), abrégée par ASPSM, envoyés par la pluralité de processus de serveurs d'applications (40A, 40B, 40C) à la passerelle de signalisation (34) de telle sorte que le répartiteur de charge (38) apparaisse comme une passerelle de signalisation unique (34) aux processus de serveurs d'applications (40A, 40B, 40C) et que le répartiteur de charge (38) apparaisse comme un processus de serveurs d'applications unique (40A, 40B, 40C) à la passerelle de signalisation (34), la consolidation comprenant : lors de la réception d'un premier signal ASP UP, d'un signal ASP ACT ou d'un message de requête d'enregistrement de clé de routage provenant de l'un des processus de serveurs d'applications (40A, 40B, 40C), l'acheminement de ce message par le répartiteur de charge (38) à la passerelle de signalisation et après cela, l'acquittement d'un autre signal ASP UP, signal ASP ACT ou de messages de requête d'enregistrement de clé de routage provenant d'autres des processus de serveurs d'applications (40A, 40B, 40C) ; et l'accumulation et l'acquittement par le répartiteur de charge (38) du signal ASP DOWN, du signal ASP INACT ou des requêtes de radiation de clé de routage reçues depuis l'un quelconque des processus de serveurs d'applications (40A, 40B, 40C) jusqu'à ce qu'un signal final ASP DOWN, un signal ASP INACT ou une requête de radiation de clé de routage soit reçu depuis l'un des processus de serveurs d'applications (40A, 40B, 40C) et l'acheminement de ce signal final ASP DOWN, signal ASP INACT ou requête de radiation de clé de routage vers la passerelle de signalisation (34).
